# EUROPEAN PATENT SPECIFICATION

(11) **EP 0 999 003 B1**
(45) Date of publication and mention of the grant of the patent: **02.08.2006**
(21) Application number: 99307804.7
(22) Date of filing: 04.10.1999
(51) Int. Cl.: B23B 13/02, B23B 13/08

(54) **Bar processing apparatus and bar loader**
Stangenbehandlungsgerät und Stangenladegerät
Appareil d'usinage de barres et appareil de chargement de barres

(30) Priority: 02.10.1998 JP 28151198; 22.12.1998 JP 36473698
(43) Date of publication of application: 10.05.2000
(73) Proprietor: IKURASEIKI SEISAKUSHO CO. Ltd., Shimodate-shi, Ibaraki-ken (JP)
(72) Inventor: Hirosawa, Kiyoshi, Shimodate-shi, Ibaraki-ken (JP); Ito, Takazo, Hachioji-shi, Tokyo (JP); Sato, Kenji, Yachiyo-shi, Chiba-ken (JP)
(74) Representative: Marlow, Nicholas Simon

(56) References cited:
- US-A- 4 638 693
- US-A- 4 679 470
- US-A- 5 343 788

## Description

### BACKGOUND OF THE INVENTION

The present invention relates to a bar processing apparatus and a bar loader and, in particular, to those which are highly effective for preventing the vibration of a bar.

### DESCRIPTION OF THE PRIOR ART

A bar processing apparatus, such as a NC automatic lathe for machining a leading end portion of a bar, is well known. A bar to be machined is supplied to the bar processing apparatus by a bar loader which is arranged adjacent thereto and on an upstream side thereof with respect to a feeding direction of the bar. The bar loader has a guide rail extending straight toward the bar processing apparatus. The bar is moved forward in the bar feeding direction along the guide rail by a feeding rod and is supplied to the bar processing apparatus. The bar processing apparatus has a spindle extending in a longitudinal direction thereof and the bar is fed therethrough. The leading end portion of the bar is chucked by a collet chuck, and the bar is machined by a bite while being rotated at a high speed during a manufacturing process to make products.

As described above, since the bar is rotated at a high speed while being machined, the bar may interfere with the guide rail of the bar loader and/or a main shaft of the bar processing apparatus especially when the bar is bent. Such bent or flexure may cause a vibration accompanying a noise.

US 5 343 788 discloses an automatic bar loader, for supplying a bar to a bar processing apparatus, having a hollow guide tube filled with a fluid which supports the trailing portion of the bar (furthest from the end to be machined) as it rotates within the tube. The bar is advanced towards the bar processing apparatus by a piston pusher connected to a pump which provides the necessary pressure.

US 4 679 470 discloses a bar loader for a multi-spindle lathe which has a plurality of hollow guide tubes filled with a fluid which supports the trailing portion of each bar. The bar is advanced to the lathe by the fluid under pressure acting on a piston pusher.

The object of the present invention is to provide a bar processing apparatus which simplifies a worker's operation, has a simple structure and is highly effective for preventing a vibration.

### SUMMARY OF THE INVENTION

The object of the present invention described above can be achieved by a bar processing apparatus, comprising: a collet chuck for chucking a leading end portion of a bar to be machined; a spindle for rotating the bar at a high speed; a hollow tube which is arranged coaxilly with the collet chuck and extends from the vicinity of the collet chuck through the spindle toward an upstream side with respect to a feeding direction of the bar, the hollow tube being provided with a first bar passage whose ends are open and whose inner diameter is of a size which allows to form an oil layer around the outer surface of the bar by the rotation of the bar accommodated within the bar passage; an oil injecting inlet which is open toward the inside of the hollow tube; and oil supply means for supplying oil to the oil injecting inlet.

The bar processing apparatus of the present invention works as follows. The bar to be machined is fed toward the bar processing apparatus by the bar loader arranged adjacent thereto and on an upstream side thereof with respect to a bar feeding direction. The bar loader comprises a guide rail extending straight toward the bar processing apparatus and a feeding rod moving back and forth therein. The rear end of the bar is pushed forward in the guide rail by the feeding rod whereby the bar is fed into the first bar passage of the hollow tube. The leading end portion of the bar is chucked and fixed by the collet chuck and is rotated at a high speed by the spindle.

While the bar is rotated, oil is supplied into the first bar passage through the oil injecting inlet. As the rotational speed of the bar increases, the oil is dragged along a circumferential surface of the bar whereby an oil layer is formed between the bar and the inner wall surface which defines the first bar passage. Thus, the oil layer lifts the bar and functions as a cushion between the bar and the inner wall surface to prevent the contact therebetween, and thereby the vibration and the noise can be prevented. Further, since the clearance between the inner wall surface of the first bar passage and the outer surface of the bar accommodated therein is of a size which allows to form an oil layer therebetween, the hollow tube need not be replaced every time the outer diameter of the bar changes to various sizes which results in simplifying a replacement operation.

Further, the object of the present invention described above can be achieved by a bar loader to be used in combination with a bar processing apparatus having a collet chuck for chucking a leading end portion of a bar to be machined; a spindle for rotating said bar at a high speed; a hollow tube which is arranged coaxilly with said collet chuck and extends from the vicinity of said collet chuck through said spindle toward an upstream side with respect to a feeding direction of said bar, said hollow tube being provided with a first bar passage whose ends are open and whose inner diameter is of a size which allows to form an oil layer around the outer surface of said bar by the rotation of said bar accommodated within said bar passage; an oil injecting inlet which is open toward the inside of said hollow tube; and oil supply means for supplying oil to said oil injecting inlet, comprising: a guide rail member extending straight from said hollow tube toward an upstream side with respect to a feeding direction and having an upward opening; and a lid member for closing said opening, wherein when said opening is closed by said lid member, a second bar passage having an inner diameter equal to that of said first bar passage and extending coaxially with said first bar passage is formed between said guide rail member and said lid member; and a coupling means for coupling said first bar passage with said second bar passage so that a continuous bar passage is formed thereby.

Since the bar loader described above allows the first bar passage to be extended so that even a long bar can be entirely accommodated within the bar passage, the oil layer prevents the entire bar from being brought into contact with the inner wall surface of the bar passage. It results in the prevention of the vibration and the noise.

### BRIEF DESCRIPTION OF THE DRAWINGS

Fig. 1 is an overall schematic side view of a bar processing system according to an embodiment of the present invention, comprising a bar processing apparatus adapted especially for processing a short bar, and a bar loader for feeding a bar to the bar processing apparatus. It is to be noted that the spindle is shown by a solid line to clearly show the shape thereof although a spindle is installed inside the bar processing apparatus clear,
Fig. 2 is an enlarged view of a hollow tube having a spindle and a bar passage;
Fig. 3 is a cross-sectional view the hollow tube taken along a line III-III in Fig. 2, illustrating relative positions of an oil injecting inlet and a bar passage of a hollow tube;
Fig. 4 is an overall schematic view of a bar processing apparatus and a bar loader according to a second embodiment of the present invention;
Fig. 5 is a cross-sectional view taken along a line V-V in Fig. 4, wherein a lid member is at a retracted position and an opening of a guide rail member is open;
Fig. 6 is a cross-sectional view taken along a line V-V in Fig. 4, wherein a lid member is at a closed position and an opening of a guide rail member is closed;
Fig. 7 is a detailed view illustrating a coupling portion where a rear end portion of a hollow tube of a bar processing apparatus is coupled with a guide rail member and a lid member of a bar loader; and
Fig. 8 is a detailed view illustrating the vicinity of a front end portion of a hollow tube of a bar processing apparatus.

### DESCRIPTION OF THE PREFERRED EMBODIMENTS

Referring to the drawings attached herewith, embodiments of the present invention shall hereafter be described in detail.

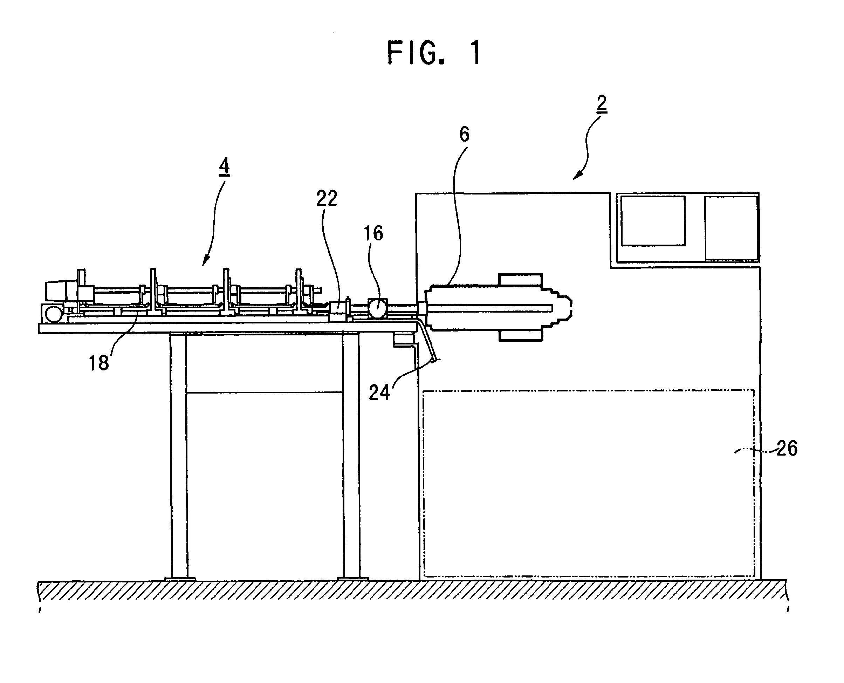

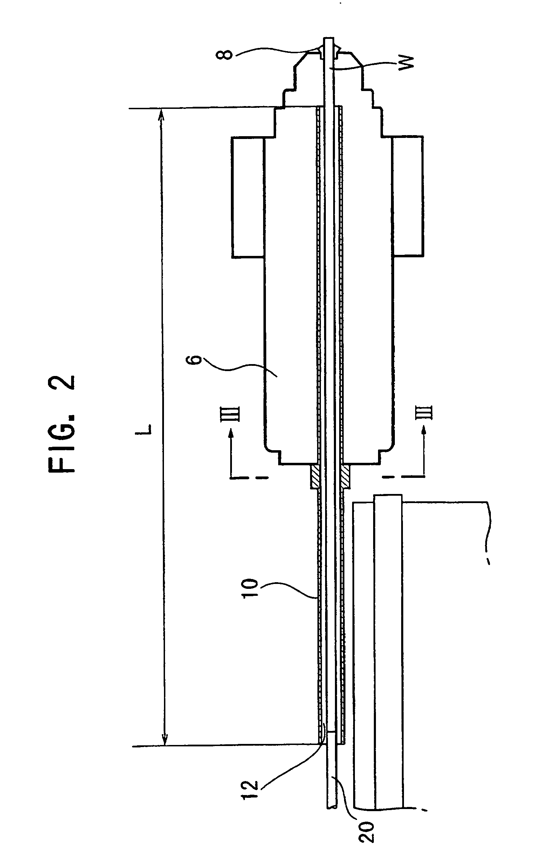

As shown in Fig. 1, a bar W to be machined is supplied to a bar processing apparatus 2, such as an NC automatic lathe, by a bar loader 4 disposed on an upstream side thereof with respect to a bar feeding direction of the bar W. The bar processing apparatus 2 has a spindle 6 extending horizontally and for rotating the bar W at a high speed during a manufacturing process. The spindle 6 has a collet chuck 8 for chucking and fixing a leading end portion of the bar W. As can be seen in Fig. 2, the spindle 6 has a hollow tube 10 therein which is arranged coaxially with the collet chuck 8 and extend S through the spindle 6 from the vicinity of the collet chuck 8 to the upstream side thereof with respect to the bar feeding direction, and further extends out of the spindle 6 so as to protrude therefrom in a backward direction. The hollow tube 10 has a length L enough to house substantially the entire bar W to be machined. In the present embodiment, the bar processing apparatus 2 is for processing a short bar whose typical length is less than 1 m. Therefore, the hollow tube 10 is about 1 m long. The hollow tube 10 has a cylindrical bar passage 12 formed therein whose both ends are open. An inner diameter of the bar passage 12 is larger than the outer diameter of the bar W to be machined. Therefore, a clearance S is formed between the outer surface of the bar W and the inner wall surface of the bar passage 12 when the bar W is accommodated inside the bar passage 12. The hollow tube 10 is selected so that a clearance S allows the oil to move together with the circumferential surface of the bar due to the rotation thereof so that an oil layer is formed around the bar W. The most preferable clearance S is 0.5 mm to 1.0 mm for preventing the flexure of the bar or the clearance may be 1 to 3 mm. Further, the hollow tube 10 can be replaced depending on an outer diameter of the bar to be machined so that clearance S allows the oil to move with the circumferential surface of the bar when the bar is rotated so that an oil layer is formed around the bar W.

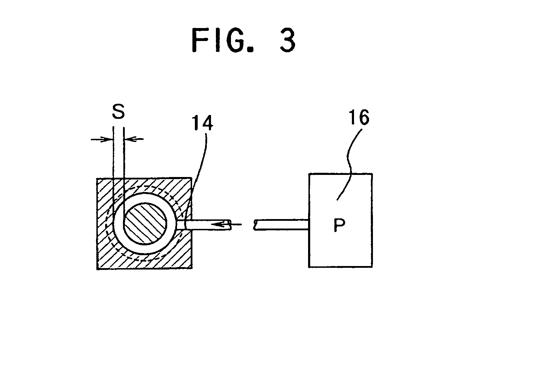

As shown in Fig. 1, the hollow tube 10 has an oil injecting inlet 14 for injecting oil into the bar passage 12 at a middle portion thereof in the longitudinal direction. The oil injecting inlet 14, as shown in Fig. 3, is open in a horizontal direction toward the bar W in the bar passage 12. Further, the oil injecting inlet 14 is connected to an oil pump 16 by which the oil is supplied to the oil injecting inlet from an oil tank 26 which is mounted on the bar processing apparatus 2. The oil used therefor is the same kind as that used as cutting oil supplied to the vicinity of the bite used in the bar processing apparatus 2 . Further, as shown in Fig. 1, an oil tray 22 for recovering the oil which flows out of the rear end portion is attached to the bar loader 4 below the rear end portion of the hollow tube 10. Further, a hose 24 is provided between the oil tray 22 and the bar processing apparatus 2. The hose 24 is coupled to the oil tray 22 at one end. The other end thereof is directed toward the oil tank 26 of the bar processing apparatus 2.

Referring again to Fig. 1, the bar loader 4 is arranged adjacent to and behind the bar processing apparatus 2. The bar loader 4 comprises a guide rail which extends straight toward the bar processing apparatus 2 and is arranged coaxially with the hollow tube 10. A feeding rod 20 for feeding the bar W in the forward direction is accommodated in the guide rail. The feeding rod 20 is a bar member having a generally circular cross-section. The outer diameter thereof is approximately the same as or less than that of the bar W to be machined so that the rod can freely enter and exit the bar passage 12. The feeding rod 20 also has a front end surface which makes contact with the rear end surface of the bar W. The feeding rod 20 is coupled to a motor (not illustrated) via an endless chain (not illustrated) and is moved back and forth by the chain. At one side of the guide rail, a stock rack (not illustrated) for holding a plurality of bars W is arranged. As shown in Fig. 1, a plurality of indexing plates are disposed above the guide rail. They are attached to a rotatable shaft arranged parallel to the guide rail. The bars W to be taken out of the stock rack one by one by the indexing palates when rotated and to be fed into the guide rail.

The bar processing apparatus 2 and the bar loader 4 according to the present embodiment functions as follows.

At first, the feeding rod 20 is at a retracted rear position in the guide rail. When the bar loader 4 and the bar processing apparatus 2 start to operate, indexing plates are rotated by a controller to take out a new bar W out of the stock rack to supply it in front of the feeding rod 20 in the guide rail. The feeding rod 20 is moved forward via the endless chain by the motor and the front end thereof abuts with the rear end surface of the bar W. When the feeding rod 20 is further moved in the forward direction, the bar W is fed forward toward the bar processing apparatus 2 and is inserted into the bar passage 12 of the hollow tube 10 of the bar processing apparatus 2. When the leading end portion of the bar W reaches a predetermined position where the bar W protrudes a predetermined length out of the collet chuck 8, the collet chuck 8 closes to fix the bar W. At this position, the bar W is entirely accommodated in the bar passage 12 of the hollow tube 12 wherein the feeding rod 20 is positioned 2 to 3 mm behind the bar W.

At the same time, oil is supplied into the bar passage 12 via the oil injecting inlet 14 by the oil pump 16. Then, the bar W is rotated at a high speed by the spindle. Since the end surface of the feeding rod 20 and the bar W abuts with each other but are not joined with each other, the feeding rod 20 does not rotate. Further, the vibration of the bar W is not transmitted to the feeding rod 20 even though the bar W is rotated. With the increase in the rotational speed of the bar W, the oil is dragged along the outer circumferential surface of the bar W. Thus, an oil layer is formed in the clearance S between the bar W and the inner wall surface defining the bar passage 12. Thus, the bar W is entirely lifted toward a center axis of a hollow tube 10. Therefore, the bar is surrounded by an oil layer and does not make contact with the inner wall surface of the bar passage 12 of the hollow tube 10 while the bar W is rotated at a high speed.

The oil flow rate is determined in such a manner that the oil actually fills the clearance S between the bar W accommodated in the bar passage 12 and the inner wall surface of the bar passage 12. The oil flows out of both open ends of the hollow tube 10. The oil which flows out of the rear end portion of the hollow tube 10 is collected by the oil tray 22 and is returned to the oil tank 26 of the bar processing apparatus 2 via the hose 24. Further, the oil which flows out of the front end portion of the hollow tube 10 flows directly into the oil tank 26 to be collected therein. Again, the oil is recirculated from the oil tank 26 to the bar passage 12 by the oil pump 16. The oil layer works as a cushion between the bar W and the inner wall surface of the bar passage 12, preventing the contact therebetween.

The leading end portion of the bar W which was machined is cut by a bite. Then, the collet chuck releases the bar W, and the feeding rod 20, moves the bar W forward to the next position for manufacturing another product while pushing the rear end surface of the bar in the hollow tube 10. Repeating the above-mentioned cycle, the leading end portion of the bar W is machined and is cut to manufacture products one after another. When a remnant becomes of a length from which no more product can be machined, the feeding rod 20 further moves forward in the hollow tube 10, pushes the remnant ahead of the collet chuck 8 to dispose it.

A bar processing apparatus 30 according to the second embodiment is configured in a similar manner as the first embodiment described above except that the rear end portion of the hollow tube 10 which protrudes backward out of the bar processing apparatus 30 is shorter than that in the first embodiment and that the hollow tube 10 has an O-ring 89 on the rear end portion thereof. The same reference numerals are used for the same elements to omit the detailed explanation thereof.

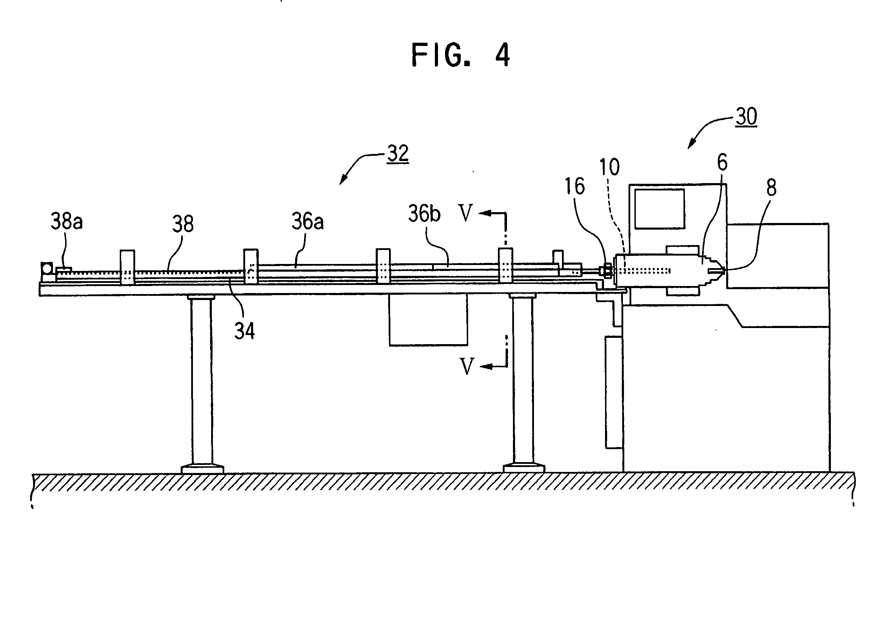

As shown in Fig. 4, a bar W to be machined is supplied to a bar processing apparatus 30, such as a NC automatic lathe, by a bar loader disposed on the upstream side with respect to the feeding direction of the bar W. As can be seen in Fig. 4, the spindle 6 has a hollow tube 10 which is arranged coaxially with the collet chuck 8 and extends through the spindle 6 from the vicinity of the collet chuck 8 toward the upstream side with respect to the bar feeding direction and further extends so as to protrude out of the spindle 6 in the backward direction. The hollow tube 10 has a bar passage 12 formed therein. As will be detailed later, the hollow tube 12 is replaceable with another one having an inner diameter corresponding to an outer diameter of the bar to be machined.

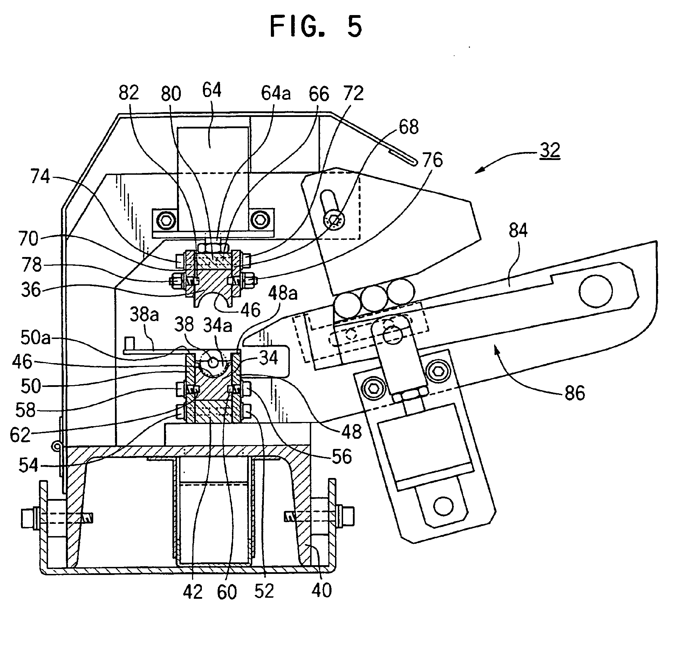

Referring again to Fig. 4, the bar loader 32 is disposed adjacent to and behind the bar processing apparatus 30. As shown in Fig. 5, the bar loader 32 comprises a guide rail member 34 extending straight toward the bar processing apparatus 30 and having an opening 34a oriented upwardly, and a lid member 36 which is disposed on the guide rail member 34 and opens toward the opening 34a. As shown in Fig. 4, at the initial position when the bar loader is operated, the feeding rod 34 is accommodated in the rear portion of the guide rail member 34, and a bar (a new bar) is taken out of a stock rack 84 by a bar taking-out mechanism 86, which will be described later, and is fed into the front portion of the guide rail member 34. The lid member 36 covers the front portion of the guide rail member 34 which accommodates the bar. Further, the lid member 36 is divided into two lid portions 36a, 36b so that the lid member 36 can partially be opened to avoid an interference as a flag portion 38a of the feeding rod 38 moves forward. The respective lid portions 36a, 36b are separately opened and closed by a cylinder 64.

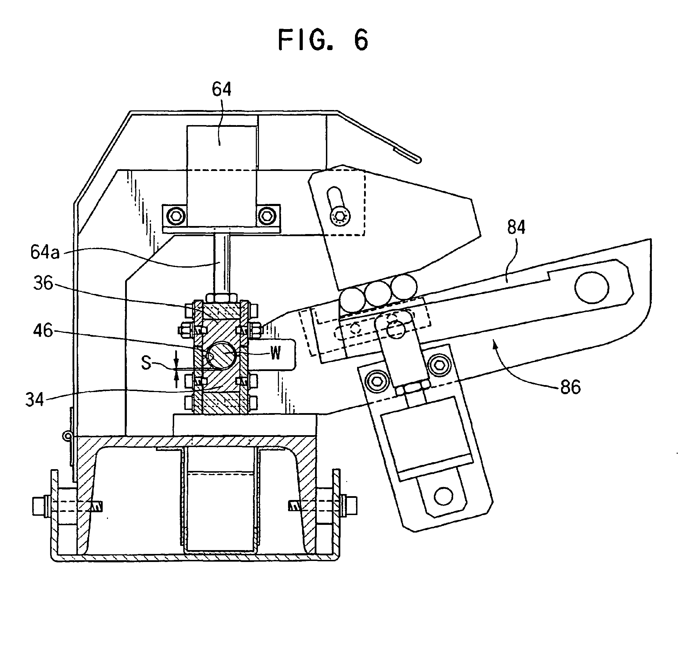

As shown in Figs. 5 and 6, the guide rail member 34 and the lid member 36 have the same width and are constituted by members having a substantially rectangular cross-section. As shown in Fig 6, when the opening 34a of the guide rail member 34 is closed by the rid member 36, a bar passage 46 having the same inner diameter as that of the bar passage 12 is formed therebetween. The upper half portion of the bar passage 46 is formed in the rid member 36 and the lower half portion of the bar passage 46 is formed in the guide rail member 34. Further, the feeding rod 38 for feeding the bar W forward is accommodated inside the guide rail member 34. Since the feeding rod 38 is a bar member having a generally circular cross-section and the outer diameter thereof is smaller than the inner diameter of the bar passage 12, the rod can freely enter and exit the bar passage 12. Further, the feeding rod 38 has a flag portion 38a which is a flat plate at the rear end portion thereof.

As shown in Fig. 5, a fixed plate member 42 which is arranged below the guide rail member 34 and extends in the longitudinal direction is fixed to a base stand 40 of the bar loader 32. The fixed plate member 42 has the same width as that of the guide rail member 34. The guide rail member 34 is placed on the fixed plate member 42 so as to align therewith. Two members 48, 50 which extend in the longitudinal direction for restricting the lateral displacement of the guide rail (hereinafter, a "lateral displacement restricting member") are arranged to hold them on both sides of the guide rail member 34 and the fixed plate member 42. The respective lateral displacement restricting members 48, 50 are fixed to the fixed plate member 42 by respective screws 52, 54 whereby the lateral displacement of the guide rail member 34 which is placed between the lateral displacement restricting members is restricted. Further, respective lateral displacement restricting members 48, 50 have respective key members 56, 58 protruding horizontally toward the guide rail member 34. The guide rail member 34 has grooves 60, 62 extending in the longitudinal direction for receiving the key members 56, 58. In this way, the longitudinal displacement of the guide rail member 34 is restricted.

The upper edges of the lateral displacement restricting members 48, 50 protrude upwardly beyond the guide rail member 34 and reach the same height. Their upper surfaces 48a, 50a are flat and define guiding surfaces for moving the feeding rod 38 back and forth as shown in Fig. 5.

As shown in Fig. 5, the bar loader 32 has a hydraulic cylinder 64 on the upper part thereof. The hydraulic cylinder 64 moves the lid member 36 between the upper position or the retracted position shown in Fig. 5 and the lower position or the closed position shown in Fig. 6. A fixed plate member 66 having a rectangular cross-section is attached to the lower end of the rod 64a of the hydraulic cylinder 64. The fixed plate member 66 has the same width as that of the lid member 36. The lid member 36 is arranged to align therewith below the fixed plate member 66. On both sides of these lid member 36 and the fixed plate member 66, two plate lateral displacement restricting members 68, 70 extending in the longitudinal direction are arranged to hold them. The respective lateral displacement restricting members 68, 70 are fixed to the fixed plate member 66 by respective screws 72, 74 and the lateral displacement of the lid member 36 placed between the lateral displacement restricting members is restricted. The lower edges of the lateral displacement restricting members 68, 70 are located above the lower edge of the lid member 36 which protrudes downward therebetween. Further, the lateral displacement restricting members 68,70 have key members 76, 78, respectively, which project horizontally toward the lid member 36, and the guide rail member 36 has grooves 80, 82 extending in the longitudinal direction for receiving the key members 76, 78. In this way, the longitudinal displacement of the lid member 36 is restricted.

As shown in Fig. 6, when the lid member 36 is at the closed position, the upper surface of the guide rail member 34 and the lower surface of the lid member 36 make contact with each other, the upper surface 48a of the lateral displacement restricting members 48 and the lower surface 68a of the lateral displacement restricting members 68, and further do the upper surface 50a of the lateral displacement restricting members 50 and the lower surface of the lateral displacement restricting members 70 also make contact with each other. Since the clearance formed between the upper edges of the lateral displacement restricting members 48, 50 and the lower edges of the lateral displacement restricting members 68, 70 and the clearance formed between the upper surface of the guide rail member 34 and the lower surface of the lid member 36, are at different heights and are not aligned with each other, they do not communicate with each other. That is, the gap between the upper surface of the guide rail member 34 and the lower surface of the lid member 36 is closed by the upper edge portions of the lateral displacement restricting members 48, 50, resulting in no oil leakage from the gap.

As shown in Figs. 4 and 5, a stock rack 84 for placing a plurality of bars to be machined and a bar taking-out mechanism 86 for taking out a bar one by one from the stock rack 84 are disposed on one side of the guide rail member 34. The details thereof shall not be described as their configuration are well known.

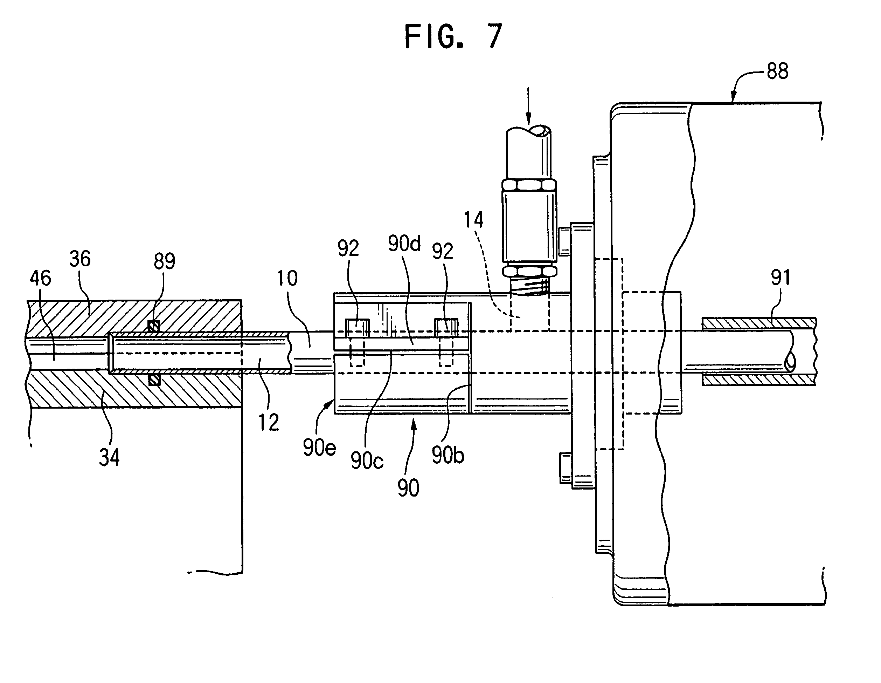

As shown in Fig. 7, at the front end portion of the bar passage 46 formed by the guide rail member 34 and the lid member 36, a stepped portion 88 for insertion (hereinafter, a "stepped inserting portion") is formed to receive the rear end portion of the hollow tube 10. The rear end portion of the hollow tube 10 is inserted into the stepped inserting portion 88 to be coupled with the bar passage 12. In this way, the bar passages 12 and 46 having the same inner diameter are coupled coaxially with each other and a single bar passage is formed from the bar processing apparatus 30 to the bar loader 32 thereby. In order to prevent oil leakage from the coupling portion, an O-ring 89 is provided on the outer surface of the rear end portion of the hollow tube 10 where the hollow tube 10 is coupled with the guide rail member 34 and the lid member 36.

The hollow tube 10, the guide rail member 34 and the lid member 36 of the bar processing apparatus 30 and the bar loader 32 according to the second embodiment can be replaced with the ones which form the passages 12, 46 having an inner diameter suitable for the outer diameter of the bar to be machined. As shown in Fig. 7, an attachment 90 for holding and fixing the hollow tube 10 (hereinafter, a "hollow tube fixing attachment") is mounted on a rear end portion of a main shaft stand 88 of the bar processing apparatus 30. The hollow tube fixing attachment 90 is arranged coaxially with the hollow tube 10 and has a tubular portion 90a whose inner diameter is larger than the outer diameter of the hollow tube 10. The tubular portion 90a receives a front end portion of the hollow tube 10. It has a clamp portion 90e for holding and clamping the hollow tube 10 at a rear end thereof.

The clamp portion 90e is formed as follows. Two movable portions which oppose to each other with a second slit 90c there between are formed by a first slit 90b which is formed in a middle portion of the tubular portion 90a and which circumferentially extends about a half of the hollow tube fixing attachment 90, and a second slit 90c which axially extends across a middle portion of the first slit 90b toward the front end of the hollow tube 10. A flange portion 90d is formed by machining the upper side portion of the upper movable portion along the second slit 90c. Onto the flange portion 90d, two bolts 92 which extend to the end portion of the other movable portion opposite to the movable portion are arranged at a space from each other in the axial direction. The hollow tube is inserted into the clamp portion 90e and then, the bolts 92 are tightly fastened. In this way, the inner diameter of the clamp portion 90e is substantially reduced whereby the hollow tube 10 is fixed to the clamp portion 90e.

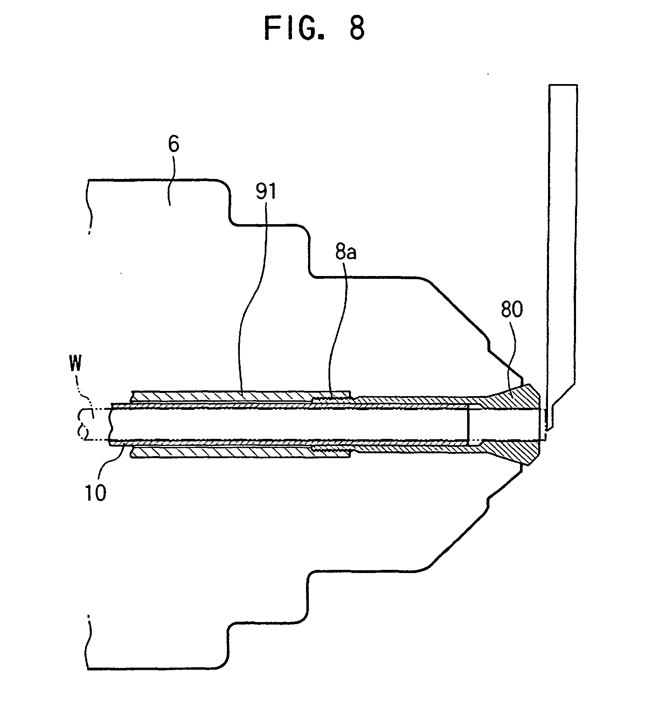

As can be seen from Figs. 7 and 8, a main shaft tube 91 which extends in the axial direction and is rotated by the spindle 6 is arranged inside the spindle 6 of the main shaft stand 88. The front end portion of the main shaft tube 91 is internally threaded to form female threads 8a which threadably engages with the male thread of the rear end portion of the collet chuck 8. The outer diameter of the hollow tube 10 is set to be smaller than the inner diameter of the main shaft tube 91 so that the rotation of the main shaft tube 91 is not transmitted. In the present embodiment, the outer diameter of the hollow tube 10 is 13 mm wherein the inner diameter of the main shaft tube 91 is 15 mm. The collet chuck 8 is replaced with another one which is suitable for receiving an outer diameter of the bar to be machined. In the present embodiment, the case where a thick bar is machined is shown and the inner diameter of the collet chuck is the same as the diameter of the main shaft tube 91. In this way, the hollow tube 10 is inserted into the hollow tube fixing attachment 90, the main shaft tube 91 and further the collet chuck 8. To prevent the vibration and the noise, the bar is preferably accommodated inside the hollow tube 10 until the machining operation is over, and the hollow tube 10 preferably extends into the collet chuck 8. However, when a thin bar is machined, the hollow tube 10 cannot be inserted into the collet chuck because the inner diameter of the collet chuck is small. Therefore, a relatively short hollow tube whose front end terminates in the vicinity of the rear end of the collet chuck 8 is used.

The guide rail member 34 of the bar loader 32 can be replaced as follows. First, the screw 54 is detached and then, the lateral displacement restricting member 50 is detached by moving laterally. Further, the guide rail member 34 is detached by laterally sliding on the fixed plate member 42. Then, a guide rail member 34 with a bar passage 46 whose inner diameter is suitable for the outer diameter of the bar to be machined in the subsequent process is selected. It is placed on the upper surface of the fixed plate member 42 and is brought into contact with the side surface of the lateral displacement restricting member 48 so that the key member 56 is received in the groove 60. Then, the lateral displacement restricting member 50 is brought into contact with the side surface of the guide rail member 34 so that the key member 58 is received in the groove 62. Then, the lateral displacement restricting member 50 is fixed to the fixing member 42 by the screw 54.

Further, to replace the lid member 36 of the bar loader 32, first, the screw 72 or 74 is detached and the lateral displacement restricting member 68 or 70 is laterally moved to be detached. In this way, the lid member 36 is detached. Then, a lid member 36 having a bar passage 46 whose inner diameter is suitable for the outer diameter of the bar to be machined in the subsequent process is selected. The lateral displacement restricting member 68 or 70 is brought into contact with the side surface of the lid member 36 so that the key member 76 or 78 is received in the groove 80 or 82. Then, the lateral displacement restricting member 76 or 78 is fixed to the fixing member 66 by the screw 72 or 74.

The rear end portion of the hollow tube 10 is inserted into the stepped inserting portions of the front end portions of the guide rail member 34 and the lid member 36 so that they are coupled.

The bar loader 32 and the bar processing apparatus 30 work as follows. First, the feeding rod 38 is located at the retracted position behind the guide rail member 34 as shown in Fig. 1. The lid members 36a and 36b are located at the upper retracted position. A bar is taken out of the stock rack 84 by the bar taking-out mechanism 86 and fed into the front portion of the guide rail 34 in front of the feeding rod 38. Then, the lid members 36a and 36b are moved to the closing position by the cylinder 64 and the opening 34a of the guide rail member 34 is closed by the lid member 36. Subsequently, the feeding rod 38 is moved forward via the endless chain driven by the motor and the front end surface of the rod abuts with the rear end surface of the bar W. When the feeding rod 38 is further moved forward, the bar W is transported forward toward the bar processing apparatus 30 and is inserted into the bar passage 12 of the hollow tube 10 of the bar processing apparatus 30. When the leading portion of the bar W reaches a predetermined position where the bar protrudes out of the collet chuck 8 by a predetermined length, the collet chuck 8 chucks and fixes the bar W.

At the same time, oil is supplied into the bar passages 12, 46 via the oil injecting inlet 14 by the oil pump 16. The bar W is rotated at a high speed by the spindle 6. At this moment, this feeding rod 20 is located about 2 to 3 mm behind the bar W and they are not coupled with each other. Therefore, the feeding rod 20 does not rotate due to the rotation of the bar W or the vibration of the bar W is not transmitted thereto. With the increase in the rotational speed of the bar W, oil is dragged along the outer surface of the bar W and an oil layer is formed in the clearance S between the bar W and the inner wall surface which defines the bar passages 12, 46. Though the most preferable clearance S for forming the oil layer around the bar is 0.5 to 1 mm, the preferable clearance may be 1 to 3 mm. In this way, the bar W is entirely lifted toward the center axis of the bar passages 12, 46. Therefore, the bar W is surrounded by an oil layer and does not make contact with the inner wall surface of the bar passages 12, 46. The oil flow rate is determined so that the oil actually fills the clearance S between the bar W and the inner wall surface of the bar passages 12, 46. The oil flows out of the open front end of the hollow tube 10 and the open rear end of the guide rail member 34. The oil flows out of the rear end portion of the guide rail member 34 is collected and recirculated as in the first embodiment shown in Fig. 1.

The leading end portion of the bar W whose machining has be completed is cut by a bite. Then, the collet chuck releases the bar and the feeding rod 20 moves the bar in the forward direction to the next position for manufacturing another product by pushing the rear end surface of the bar W in the guide rail 34 or the hollow tube 10. When the flag portion 38a of the feeding rod 38 is moved forward and comes close to the lid member 36a, the lid member 36a is moved to the retracted position by the cylinder 64. When the flag portion 38a moves to the lid member 36b, the lid member 36b 38a is opened to avoid interference therebetween. The leading end portion of the bar W is machined and is cut to manufacture products one after another. When a remnant becomes of a length from which no more product can be machined, the feeding rod 38 further moves forward in the hollow tube 20, pushes out the remnant ahead of the collet chuck 8 for disposal.

In the first embodiment described above, since the hollow tube 10 is long enough to entirely accommodate the bar W and the bar W is entirely surrounded by the oil layer, the contact between the bar W and the inner wall surface of the bar passage 12 of the hollow tube 10 is prevented. The vibration and the noise can be also prevented thereby. Further, in the present embodiment, the bar processing apparatus 2 is mainly for processing a short bar and the bar W to be machined is relatively short. That is, the bar W is relatively light and the deformation of the bar at the trailing portion thereof is relatively small. Accordingly, in the case of a short bar, the bar W is assured to be lifted toward the center axis of the hollow tube 10 and a high effect for preventing the vibration and the noise can be obtained.

In the first embodiment described above, since the bar W is entirely lifted by the oil layer the physical contact between components can be avoided and the cause of vibration can be eliminated. Therefore, no other means for preventing vibration such as a vibration suppresser is necessary.

Further, in the first embodiment described above, the outer diameter of the feeding rod 20 is set to be approximately equal to or smaller than that of the bar to be machined. Therefore, the inner diameter of the bar passage 12 of the hollow tube 10 can be determined regardless of the outer diameter of the feeding rod 20. The inner diameter may be determined so that the most preferable clearance S is formed between the outer surface of the bar W to be machined and the inner wall surface of the bar passage 12 so that a hydrodynamic centrifugal force from the oil acts on the bar W. Further, since the most preferable clearance S can be any size within a certain range, the same hollow tube 10 is applicable to various bars W so long as the outer diameter of the bar W is within a predetermined range.

Further, in the first embodiment described above, since the same oil as the machining oil supplied to the vicinity of a bite is used, a mixture of different kinds of oil inside the bar processing apparatus can be avoided. Further, only a single oil tank 26 is required and no means for preventing oil from mixing is required.

Further, in the first embodiment described above, the oil injecting inlet 14 is provided at a middle portion of the hollow tube 10, oil can be uniformly supplied to the entire bar W by a single oil injecting inlet 14 provided in the bar passage 12 whose both ends are open.

In the second embodiment described above, the bar passage 46 which is defined by the guide rail member 34 and the lid member 36 extends behind the bar passage 12 of the hollow tube 10. Therefore, even if the bar to be machined is a long bar, for example, over 1 m long, the entire bar can be accommodated within the bar passages 12, 46 and whereby the entire bar is lifted toward the center axis of the bar passages 12, 46 by the oil layer. It enables to prevent the bar from making contact with the inner wall surface of the bar passages 12, 46 and the vibration and the noise are suppressed.

Further, in the second embodiment described above, depending on the diameter of the bar to be machined, the hollow tube 10, the guide rail member 34 and the lid member 36 can be replaced with those having an inner diameter of the bar passages 12, 46 which allows a clearance S for the oil layer to be formed between the bar and the bar passage 12, 46. It assures that an oil layer to be formed around the bar.

Further, in the second embodiment described above, the replacing operation is facilitated since the guide rail member 34 and the lid member 36 can be replaced by merely fastening and unfastening the screws 52, 54, 72, 74. Further, the lateral displacement is restricted by the lateral displacement restricting members 48, 50, 68, 70 and the longitudinal displacement is restricted by the key members 56, 58, 76, 78 and the grooves 60, 62, 80, 82. Therefore, these members can be fixed utilizing simple means.

Further, in the second embodiment described above, the clearance between the upper edges of the lateral shift restricting members 48, 50 and the lower edges of the lateral shift restricting members 68, 70, and that between the upper surface of the guide rail member 34 and the lower surface of the lid member 36 are not aligned with each other due to a difference in their heights. Therefore, they do not communicate with each other. The clearance between the guide rail member 34 and the lid member 36 is closed by the upper edge portions of the lateral shift restricting members 48, 50 whereby oil leakage is prevented.

Further, in the first and second embodiments described above, the bar W and the feeding rod are not coupled with each other. Therefore, the path which transmits the vibration between the feeding rod 20 and the bar is discontinued. The vibration and the noise which would have been produced if the feeding rod 20 and the guide rail of the bar loader 4 were in contact with each other can be avoided. It is highly effective for preventing the vibration of the entire system including the bar processing apparatus 2 and the bar loader 4.

Further, in the first and second embodiments described above, the feeding rod 20 has a generally circular cross-section and the front end surface thereof comes into contact with the rear end surface of the bar W to feed the bar W in the forward direction. Therefore, it is not necessary to machine the rear end portion of the bar to reduce the diameter thereof to make it possible to hold the rear end portion of the bar by a chucking portion of the feeding rod, such as a finger chuck, provided at the front end portion thereof. Therefore, the operations can be simplified.

The present invention has thus been shown and described with reference to specific embodiments. However, it should be noted that the arrangements but changes and modifications may be made without departing from the scope of the appended claims.

For example, in the first embodiment described above, the bar W is entirely accommodated within the hollow tube 10. However, it may be possible, to accommodate the leading end portion and the middle portion of the bar to be machined in the hollow tube 10 whereas the trailing portion thereof is supported by a bar vibration suppresser so that the middle portion of the bar W which tends to deflect is lifted by the hydrodynamic centrifugal force from the oil.

Further, in the first embodiment described above, the length of a hollow tube 10 is 1m and the embodiment is particularly suitable for a short bar of less than 1 m in length, whereas the second embodiment describes above is suitable for a long bar of over 1m in length. The hollow tube 10 in the first embodiment, however, may be made longer or shorter according to the length of the bar to be machined. Further, even in a case of a short bar, the guide rail member 34 and the lid member 36 may be provided behind the short hollow tube 10 as in the second embodiment to extend the bar passage 46.

Further, in the second embodiment described above, although the oil injecting inlet and the oil pump 16 are provided on the side of the bar processing apparatus 30, these may be provided at the middle portion of the bar passages 12, 46 and may also be installed on the side of the bar loader 32.

Further, in the second embodiment described above, the rear end portion of the hollow tube 10 is inserted into the stepped inserting portions of the front end portions of the guide rail member 34 and the lid member 36 so that they are coupled with each other. However, they may be connected by other means, for example, by face-to-face contact with a sealant therebetween so long as there is no oil leakage.

Further, in the first and second embodiments described above, though the most preferable clearance between the bar and the inner wall surface of the hollow tube 10 is 0.5 to 1 mm and the clearance may be 1 to 3 mm, the clearance S may be changed depending on the oil viscosity so that the oil layer is formed around the bar by the rotation thereof.

## Claims

1. A bar processing apparatus (2) (30), comprising:
a collet chuck (8) for chucking a leading end portion of a bar (W) to be machined;
a spindle (6) for rotating said bar at a high speed;
a hollow tube (10) which is arranged coaxially with the collet chuck (8) and which extends from the vicinity of the collet chuck (8) through the spindle (6) toward an upstream side with respect to the feeding direction of the bar (W), the hollow tube (10) being provided with a first bar passage (12) whose ends are open and whose inner diameter is of a size which allows an oil layer around the outer surface of the bar (W) to be formed by rotation of the bar within the bar passage (12);
an oil injecting inlet (14) open toward the inside of the hollow tube (10); and
oil supply means (16,26) for supplying oil to the oil injecting inlet (14).

2. A bar processing apparatus (2) according to claim 1 wherein the hollow tube (10) extends out of the spindle (6) in a backward direction so that an entire bar (W) to be machined is accommodated within the first bar passage (12).

3. A bar processing apparatus (2) according to claim 1 or 2 wherein the oil supplied into the first bar passage (12) is a cutting oil.

4. A bar loader (4) (32) to be used in combination with a bar processing apparatus (2) (30) having a collet chuck (8) for chucking a leading end portion of a bar (W) to be machined; a spindle (6) for rotating the bar (W) at high speed; a hollow tube (10) which is arranged coaxially with the collet chuck (8) and which extends from the vicinity of the collet chuck (8) through the spindle (6) toward an upstream side with respect to a feeding direction of the bar (W), the hollow tube (10) being provided with a first bar passage (12) whose ends are open and whose inner diameter is of a size which allows an oil layer around the outer surface of the bar (W) to be formed by the rotation of the bar accommodated within the bar passage (2); an oil injecting inlet (14) which is open toward the inside of the hollow tube (10) and oil supply means (16,26) for supplying oil to the oil injecting inlet (14), comprising:
a guide rail member (34) extending straight from the hollow tube (10) toward an upstream side with respect to the said feeding direction and having an upward opening (34a); and a lid member (36) for closing the opening (34a) wherein when the opening (34a) is closed by the lid member (36), a second bar passage (46) having an inner diameter equal to that of the first bar passage (12) and extending coaxially with the first bar passage (12) is formed between the guide rail member (34) and the lid member (36); and
coupling means (88) for coupling the first bar passage (12) with the second bar passage (46) so that a continuous bar passage is formed thereby.

5. A bar loader (4) (32) according to claim 4 wherein each of the guide rail member (34) and the lid member (36) is adapted to be replaceable with another one having the first bar passage with an inner diameter suitable for an outer diameter of a bar (W) to be machined.

6. A bar loader (4) (32) according to claim 5 further comprising:
two lateral displacement restricting members (68,70) which are disposed on each side of the guide rail member (34) or the lid member (36) and each of which extends in a longitudinal direction thereof, at least one of the two lateral displacement restricting members (68,70) being detachably mounted;
key members (76,78) which are arranged on the lateral displacement restricting members (68,70) and laterally protrude toward the guide rail member (34) and lid member (36), respectively; and
recessed portions (80,82) formed in the guide rail member (34) and the lid member (36), respectively, for receiving the key members (76,78).

7. A bar loader (4) (32) according to any of claims 4 to 6 wherein the oil supplied into the first bar passage (12) is a cutting oil.

## Patentansprüche

1. Stangenbearbeitungsgerät (2) (30), umfassend:
ein Zangenfutter (8) zum Festspannen eines vorderen Endteils einer maschinell zu bearbeitenden Stange (W);
eine Spindel (6) zur Rotation der Stange mit einer hohen Drehzahl;
eine Hohlwelle (10), die koaxial zu dem Zangenfutter (8) angeordnet ist und sich von der Nähe des Zangenfutters (8) durch die Spindel (6) zu einer Seite hin nach oben in Bezug auf die Zuführrichtung der Stange (W) erstreckt, wobei die Hohlwelle (10) mit einem ersten Stangenkanal (12) versehen ist, dessen Enden offen sind und dessen Innendurchmesser eine Größe aufweist, die es ermöglicht, durch Rotation der Stange innerhalb des Stangenkanals (12) eine Ölschicht um die äußere Fläche der Stange (W) herum zu bilden;
einen zu der Innenseite der Hohlwelle (10) offenen Öleinspritzeinlass (14); und
eine Ölzufuhreinrichtung (16, 26) zum Zuführen von Öl in den Öleinspritzeinlass (14).

2. Stangenbearbeitungsgerät (2) nach Anspruch 1, bei dem sich die Hohlwelle (10) aus der Spindel (6) heraus in Richtung nach hinten erstreckt, so dass eine maschinell zu bearbeitende, ganze Stange (W) innerhalb des ersten Stangenkanals (12) aufgenommen wird.

3. Stangenbearbeitungsgerät (2) nach Anspruch 1 oder 2, bei dem das in den ersten Stangenkanal (12) zugeführte Öl ein Schneidöl ist.

4. Stangenladeeinrichtung (4) (32), die in Kombination mit einem Stangenbearbeitungsgerät (2) (30) verwendet wird, das ein Zangenfutter (8) zum Festspannen eines vorderen Endteils einer maschinell zu bearbeitenden Stange (W) aufweist; eine Spindel (6) zur Rotation der Stange (W) mit hoher Drehzahl, eine Hohlwelle (10), die koaxial mit dem Zangenfutter (8) angeordnet ist und sich von der Nähe des Zangenfutters (8) durch die Spindel (6) zu einer Seite stromaufwärts in Bezug auf eine Zuführrichtung der Stange (W) erstreckt, wobei die Hohlwelle (10) mit einem ersten Stangenkanal (12) versehen ist, dessen Enden offen sind und dessen Innendurchmesser eine Größe aufweist, die es ermöglicht, durch die Rotation der innerhalb des Stangenkanals (2) aufgenommenen Stange eine Ölschicht um die äußere Fläche der Stange (W) herum zu bilden; einen Öleinspritzeinlass (14), der zu dem Inneren der Hohlwelle (10) hin offen ist, und eine Ölzufuhreinrichtung (16, 26) zum Zuführen von Öl in den Öleinspritzeinlass (14), umfassend:
ein Führungsschienenelement (34), das sich von der Hohlwelle (10) gerade zu einer Seite stromaufwärts in Bezug auf die Zuführrichtung erstreckt und nach oben eine Öffnung (34a) aufweist; und ein Deckelelement (36) zum Schließen der Öffnung (34a), wobei zwischen dem Führungsschienenelement (34) und dem Deckelelement (36) ein zweiter Stangenkanal (46) gebildet wird, der einen Durchmesser besitzt, der dem des ersten Stangenkanals (12) entspricht, und der sich koaxial zu dem ersten Stangenkanal (12) erstreckt, wenn die Öffnung (34a) durch das Deckelelement (36) geschlossen ist; und
eine Verbindungseinrichtung (88) zum Verbinden des ersten Stangenkanals (12) mit dem zweiten Stangenkanal (46), so dass **dadurch** ein ununterbrochener Stangenkanal gebildet wird.

5. Stangenladeeinrichtung (4) (32) nach Anspruch 4, bei der das Führungsschienenelement (34) und das Deckelelement (36) jeweils so ausgebildet ist, dass es mit einem anderen, das den ersten Stangenkanal mit einem Innendurchmesser aufweist, der für den Außendurchmesser einer maschinell zu bearbeitenden Stange (W) geeignet ist, auswechselbar ist.

6. Stangenladeeinrichtung (4) (32) nach Anspruch 5, des Weiteren umfassend:
zwei Elemente (68, 70) zur Einschränkung einer seitlichen Verschiebung, die an jeder Seite des Führungsschienenelements (34) oder des Deckelelements (36) angeordnet sind, wobei sich jedes in einer Längsrichtung davon erstreckt und zumindest eines der zwei Elemente (68, 70) zum Einschränken einer seitlichen Verschiebung abnehmbar angebracht ist;
Bolzenelemente (76, 78), die an den Elementen (68, 70) zum Einschränken einer seitlichen Verschiebung angebracht sind und seitlich zu dem Führungsschienenelement (34) bzw. dem Deckelelemente (36) hervorstehen; und
ausgesparte Abschnitte (80, 82), die in dem Führungsschienenelement (34) bzw. dem Deckelement (36) ausgebildet sind, um die Bolzenelemente (76, 78) aufzunehmen.

7. Stangenladeeinrichtung (4) (32) nach einem der Ansprüche 4 bis 6, bei der das in den ersten Stangenkanal (12) zugeführte Öl ein Schneidöl ist.

## Revendications

1. Appareil de traitement de barres (2) (30), comprenant :
un mandrin à pince (8) destiné à monter en mandrin une partie d'extrémité avant d'une barre (W) à usiner ;
une broche (6) destinée à faire tourner ladite barre à grande vitesse ;
un tube creux (10) qui est agencé coaxialement par rapport au mandrin à pince (8) et qui s'étend depuis la proximité du mandrin à pince (8) à travers la broche (6) et vers un côté amont par rapport à la direction d'alimentation de la barre (W), le tube creux (10) étant muni d'un premier passage de barre (12) dont les extrémités sont ouvertes et dont le diamètre intérieur présente des dimensions qui permettent à une couche d'huile autour de la surface extérieure de la barre (W) d'être formée par rotation de la barre à l'intérieur du passage de barre (12) ;
une entrée d'injection d'huile (14) ouverte vers l'intérieur du tube creux (10) ; et
un moyen d'alimentation en huile (16, 26) destiné à alimenter de l'huile vers l'entrée d'injection d'huile (14).

2. Appareil de traitement de barres (2) selon la revendication 1, dans lequel le tube creux (10) s'étend hors de la broche (6) dans une direction arrière, de sorte qu'une barre entière (W) à usiner soit logée à l'intérieur du premier passage de barre (12).

3. Appareil de traitement de barres (2) selon la revendication 1 ou 2, dans lequel l'huile alimentée dans le premier passage de barre (12) est une huile de décolletage.

4. Chargeur de barres (4) (32) à utiliser en association avec un appareil de traitement de barres (2) (30) comportant un mandrin à pince (8) destiné à monter en mandrin une partie d'extrémité avant d'une barre (W) à usiner ; une broche (6) destinée à faire tourner la barre (W) à grande vitesse ; un tube creux (10) qui est agencé coaxialement par rapport au mandrin à pince (8) et qui s'étend depuis la proximité du mandrin à pince (8) à travers la broche (6) et vers un côté amont par rapport à une direction d'alimentation de la barre (W), le tube creux (10) étant muni d'un premier passage de barre (12) dont les extrémités sont ouvertes et dont le diamètre intérieur présente une dimension qui permet à une couche d'huile autour de la surface extérieure de la barre (W) d'être formée par la rotation de la barre logée à l'intérieur du passage de barre (2) ; une entrée d'injection d'huile (14) ouverte vers l'intérieur du tube creux (10) et un moyen d'alimentation en huile (16, 26) destiné à alimenter de l'huile vers l'entrée d'injection d'huile (14), comprenant :
un élément de rail de guidage (34) s'étendant tout droit depuis le tube creux (10) vers un côté amont par rapport à ladite direction d'alimentation et présentant une ouverture vers le haut (34a) ; et un élément de couvercle (36) destiné à fermer l'ouverture (34a), dans lequel, lorsque l'ouverture (34a) est fermée par l'élément de couvercle (36), un deuxième passage de barre (46) présentant un diamètre intérieur égal à celui du premier passage de barre (12) et s'étendant coaxialement par rapport au premier passage de barre (12) est formé entre l'élément de rail de guidage (34) et l'élément de couvercle (36) ; et
un moyen de couplage (88) destiné à coupler le premier passage de barre (12) avec le deuxième passage de barre (46) de sorte qu'un passage de barre continu soit formé de cette manière.

5. Chargeur de barres (4) (32) selon la revendication 4, dans lequel l'élément de rail de guidage (34) et l'élément de couvercle (36) sont adaptés pour être remplaçables par un autre élément présentant le premier passage de barre avec un diamètre intérieur approprié pour un diamètre extérieur d'une barre (W) à usiner.

6. Chargeur de barres (4) (32) selon la revendication 5, comprenant en outre :
deux éléments de restriction de déplacement latéral (68, 70) qui sont disposés sur chaque côté de l'élément de rail de guidage (34) ou de l'élément de couvercle (36) et dont chacun s'étend dans une direction longitudinale de ceux-ci, au moins un des deux éléments de restriction de déplacement latéral (68, 70) étant monté de manière détachable ;
des éléments de clé (76, 78) qui sont agencés sur les éléments de restriction de déplacement latéral (68, 70) et dépassent latéralement vers l'élément de rail de guidage (34) et l'élément de couvercle (36), respectivement ; et
des parties évidées (80, 82) formées dans l'élément de rail de guidage (34) et l'élément de couvercle (36), respectivement, destinées à recevoir les éléments de clé (76, 78).

7. Chargeur de barres (4) (32) selon l'une quelconque des revendications 4 à 6, dans lequel l'huile alimentée dans le premier passage de barre (12) est une huile de décolletage.
